# DEMANDE DE BREVET EUROPEEN

(11) **EP 1 233 383 A1**
(43) Date de publication de la demande: **21.08.2002**
(21) Numéro de dépôt: 01870027.8
(22) Date de dépôt: 14.02.2001
(51) Int. Cl.: G07F 7/10

(54) **Procédé et dispositif de gestion d'applications de cartes à puce**

(71) Demandeur: BANKSYS S.A., 1130 Bruxelles (BE)
(72) Inventeur: Slinckx, René, 1970 Wezembeek Oppem (BE)
(74) Mandataire: Claeys, Pierre

(57) **Abrégé**

Procédé de gestion d'applications dans un système de cartes à puce (1) qui comporte en outre un terminal (2) pour un traitement de données des cartes à puce (1) au moyen d'au moins une application, le procédé comportant de plus les étapes de charger un programme d'application dans une mémoire d'une carte à puce (1), mettre en communication la carte à puce (1) et le terminal (2), et copier dans une mémoire de programme d'applications du terminal (2) le programme d'application chargé dans la mémoire de la carte à puce (1).

## Description

La présente invention concerne un procédé de gestion d'applications dans un système de cartes à puce qui comporte en outre un terminal pour un traitement de données des cartes à puce au moyen d'au moins une application.

Jusqu'à ce jour, les applications mises au point pour être utilisées avec des cartes à puce, dites "smartcards" ou "chipcards" en anglais, sont chargées à l'avance dans les terminaux du système. Elles peuvent encore être chargées ultérieurement mais ce genre d'opération doit être réalisé par téléchargement à distance organisé par l'opérateur du système. Ni le détenteur d'une carte ni celui d'un terminal du système ne peuvent en choisir le moment.

La présente évolution des cartes à puce tend à donner à une même carte de plus en plus de possibilités d'applications diverses et variées afin d'éviter à un détenteur de devoir posséder et/ou emporter avec lui de trop nombreuses cartes, les gérer, en retenir les codes secrets, etc.

Un problème résulte de cette évolution. Le détenteur d'une carte à multiples applications n'est pas assuré que le terminal de traitement auquel il confie sa carte a en mémoire l'application dont il souhaite faire usage à ce moment.

L'invention a pour but de remédier à ce problème, et à d'autres connus dans le métier, et de procurer un procédé qui permet notamment à un détenteur d'une carte à puce d'emporter avec lui le ou les Programmes des applications pour lesquelles il souhaite utiliser sa carte, de manière à ne pas avoir à se soucier de ce que le terminal qu'il utilisera est prévu ou non pour ladite ou lesdites applications.

A cet effet, le procédé de l'invention comporte les étapes décrites dans la partie caractérisante de la revendication 1.

L'invention concerne également un dispositif de gestion d'applications dans un système de cartes à puce qui comporte en outre un terminal pour un traitement de données des cartes à puce au moyen d'au moins une application, notamment pour la mise en oeuvre du procédé de l'invention.

Suivant l'invention, ce dispositif présente les particularités décrites dans la partie caractérisante de la revendication 4.

L'invention apporte ainsi une grande flexibilité au système concerné : elle permet de charger de manière aisée toutes les (nouvelles) applications possibles dans un terminal, et cela sans limite, que ce soit par le détenteur d'une carte ou par le détenteur d'un terminal.

D'autres détails et particularités de l'invention ressortiront des revendications secondaires et de la description des dessins schématiques qui sont annexés au présent mémoire et qui illustrent, à titre d'exemples non limitatifs, le procédé et des formes de réalisation particulières du dispositif suivant l'invention.

La figure 1 montre une carte à puce et un terminal en liaison de communication.

La figure 2 montre deux cartes à puce en liaison avec deux types de moyens de chargement d'un programme d'application dans la mémoire des cartes.

Dans les différentes figures, les mêmes notations de référence désignent des éléments identiques ou analogues.

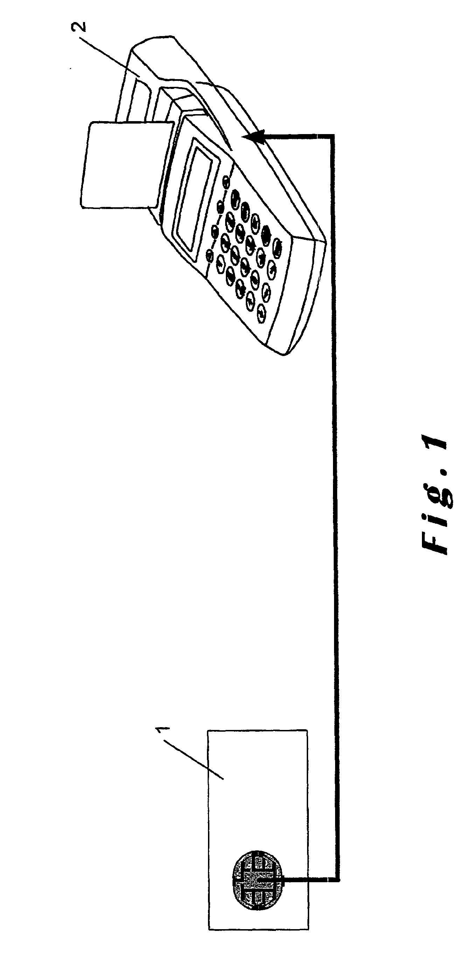

Le dispositif de gestion d'applications de l'invention concerne (figure 1) un système de cartes à puce 1 qui comporte en outre un terminal 2 pour un traitement de données des cartes à puce 1 au moyen d'au moins une application. Au moins une des cartes à puce 1 comporte une mémoire pour un stockage d'au moins un programme d'application nécessaire pour effectuer un traitement de données d'une carte à puce 1 dans le terminal 2.

En pratique, n'importe quelle carte 1 peut être utilisée pour autant qu'elle possède un minimum de mémoire en fonction de la taille du programme d'application du type "applet.zip". De plus, il faut que la carte 1 puisse recevoir au moins deux types de commande APDU (Application Protocol Data Unit = unité de données de protocole d'application) suivant spécifications ISO 7816-4 :
- une commande "ReadBinary" (lecture des données) utilisée pour lire le contenu ou une partie du contenu d'un fichier à structure transparente,
- une commande "UpdateBinary" (mise à jour des données) utilisée pour mettre à jour le contenu ou une partie du contenu d'un fichier à structure transparente.

Dans l'exemple de réalisation décrit, la carte à puce 1 est une carte à microprocesseur JAVA™ et du type "OCS' multi-applicative GalactlC" d'Oberthur, avec une mémoire EEPROM de 25K, mais elle peut être aussi une carte à mémoire simple. Cette mémoire est destinée à stocker notamment quatre octets qui représentent la taille de l'applet et ensuite le contenu de cette applet qui est la partie du programme d'application à rendre transportable dans la carte 1. (GalactlC est une marque déposée de Oberthur).

Le terminal 2 peut être par exemple du type du terminal de paiement sécurisé à applications multiples "C-ZAM/SMASH" de BANKSYS, diffusé entre autre en Belgique et conçu pour exécuter une gamme complète d'applications, notamment de paiement électronique, de porte-monnaie électronique, de programme de fidélisation de clientèle, etc...., depuis la lecture de la carte 1 jusqu'à la programmation de la puce de la carte 1. Par la machine virtuelle JAVA™ (JAVA VIRTUAL MACHINE™) que comporta le terminal 2 "C-ZAM/SMASH", celui-ci est à même d'offrir un contrôle complet de la carte 1 et de ses utilisations, en permettant une intégration aisée de fonctions spécialisées, à mesure que la gamme potentielle d'applications des cartes 1 s'accroît. (JAVA™ et JAVA VIRTUAL MACHINE™ sont des marques déposées de Sun Microsystems, Inc.) (C-ZAM/SMASH est une marque déposée de BANKSYS).

La carte à puce 1 et le terminal 2 comportent des moyens connus en soi pour leur mise en communication et comportant des moyens agencés pour copier le programme d'application de la mémoire de ladite carte à puce 1 dans une mémoire de programme(s) d'application(s) du terminal 2.

Les moyens de traitement connus du terminal 2 sont agencés, suivant l'invention, de manière à pouvoir traiter des données d'une carte à puce 1 du système au moyen du programme d'application copié de la carte 1 dans la mémoire du terminal 2.

Des moyens usuels de certification, d'authentification et de sécurité sont bien sûr incorporés dans le système dans lequel est implantée l'invention.

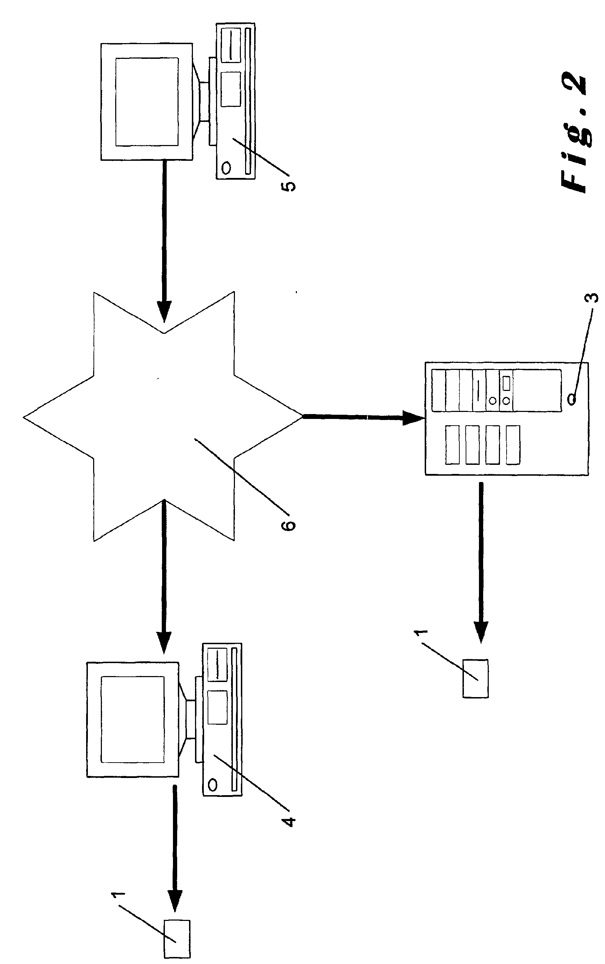

Pour le chargement d'un programme d'application dans la mémoire de la carte 1, il peut être prévu une borne de chargement 3 (figure 2) ou même un ordinateu, personnel 4 muni d'un moyen connu de lecture/écriture pour une carte à puce 1. Le programme d'application peut être fourni à la borne 3 aussi bien qu'à l'ordinateur 4 par un ordinateur principal 5, notamment via Internet (numéro de référence 6).

Sans que cela ne puisse être considéré comme une limitation de la portée du procédé revendiqué, sa description ressort de l'explication ci-après du fonctionnement du dispositif décrit.

Le procédé de l'invention pour la gestion d'applications dans un système de cartes à puce 1 consiste à la base (figure 1) à charger un programme d'application dans une mémoire d'une carte à puce 1. A cet effet, on met cette carte 1 en communication avec la borne 3 ou l'ordinateur 4 par lequel on a cherché et sélectionné l'application souhaitée. Le programme de cette application charge dans la carte 1 l'applet.zip de l'application, qui contient les fichiers ".class" de celle-ci, en lançant des commandes APDU (par exemple : "Select", "getReponse", "selectFile", "readBinary", "updateBinary").

Avec le matériel énoncé, l'applet est chargée à raison de 256 octets à la fois dans un fichier de la carte 1, qui peut contenir 25 600 octets. En raison des capacités des commandes APDU, le chargement est fait par paquets de 256 octets maximum.

Lorsque cela est nécessaire, on met en communication la carte à puce 1 et un terminal 2 du type décrit. Alors, le programme de l'application transportée lance une copie, dans une mémoire de programme d'applications du terminal 2, du programme d'application, ou applet.zip, chargé dans la mémoire de la carte à puce 1. La mémoire pour ce programme peut être une mémoire vive RAM (Random Access Memory) pour ne garder que temporairement ledit programme ou une mémoire permanente pour des utilisations ultérieures de ce programme.

Dans les conditions énoncées ci-dessus, la copie est également faite à raison de 256 octets maximum chaque fois.

Il va de soi que plus d'une application peuvent être chargées l'une après l'autre dans la carte 1 et ensuite copiées sélectivement dans le terminal 2.

Par cette procédure, un détenteur de terminal 2, tel qu'un commerçant, peut charger lui-même des nouvelles applications dans son terminal 2 après les avoir chargées sur une carte 1 à partir d'Internet ou d'une autre source compatible. Il a donc un accès direct à de nouvelles applications et peut mettre à jour d'anciennes applications et/ou informations contenues dans son terminal 2 pour reconfigurer celui-ci en fonction entre autre d'une demande locale. Il peut s'agir d'incorporer une application de fidélisation des clients nouvelle ou devenue plus intéressante ou populaire.

Par cette même procédure, un utilisateur d'une carte 1 du système a la possibilité d'emporter des applications de carte qu'il a choisies, après avoir lui aussi chargé sa carte 1 comme ci-dessus.

Après la copie du programme d'application dans la mémoire du terminal 2, un traitement de données de la carte à puce 1 de l'utilisateur peut être effectué suivant ladite application dans le terminal 2, alors que celui-ci n'était pas pourvu de cette application auparavant.

L'invention garantit donc à l'utilisateur d'une carte 1 du système précité d'avoir un accès permanent à ses applications préférées avec n'importe quel terminal 2 et, avec une seule carte 1, de pouvoir effectuer un éventail d'applications différentes, en lui donnant un accès à des transactions multifonctionnelles sur mesure.

L'application à transporter dans le carte 1 est écrite en fonction du type de terminal 2.

Il doit être entendu que l'invention n'est nullement limitée aux formes de réalisation décrites et que bien des modifications peuvent être apportées à ces dernières sans sortir du cadre des revendications.

Après le traitement des données de la carte 1 suivant ladite application dans le terminal 2, on peut faire procéder à un effacement ou une invalidation du programme d'application copié dans la mémoire du terminal 2.

L'invention peut être utilisée par des organisations, des acquéreurs ou des sociétés de conception de systèmes qui possèdent des applications dont le nombre d'utilisateurs est limité à une liste spécifique mais pas en termes de localisation géographique.

L'invention s'adresse à n'importe quel détenteur/utilisateur de terminal 2 ou opérateur qui souhaite avoir un accès ouvert aux applications disponibles ou qu'il a choisies parmi celles-ci, à n'importe quel moment. Il peut s'agir de :
- banques qui souhaitent permettre à leurs clients d'utiliser d'autres réseaux que leurs réseaux de distributeurs automatiques de billets ou leurs terminaux, tout en continuant à leur offrir leur gamme complète de services,
- sociétés qui proposent des actions de fidélisation ou autres, pour lesquelles leurs clients ont besoin d'un ample accès à leur réseau,
- sociétés de conception de systèmes qui créent des solutions sur mesure pour leurs clients qui ont besoin de travailler à l'endroit où se trouve le client,
- détaillants qui ont besoin de contrôler l'infrastructure de leur terminal 2 et les applications qu'ils supportent, utilisateurs qui souhaitent un accès garanti aux services par cartes 1 n'importe où et n'importe quand....

Un genre d'application à transporter dans une carte 1 est celle destinée par exemple à gérer un nombre de points attribués par un commerçant à détenteur d'une carte 1.

On voit ainsi que grâce à l'invention toute application d'un système de cartes à puce peut devenir portable au choix du détenteur de la carte.

## Revendications

1. Procédé de gestion d'applications dans un système de cartes à puce (1) qui comporte en outre un terminal (2) pour un traitement de données des cartes à puce (1) au moyen d'au moins une application,
le procédé étant ***caractérisé en ce qu***'il comporte les étapes de :
- charger un programme d'application dans une mémoire d'une carte à puce (1),
- mettre en communication la carte à puce (1) et le terminal (2), et
- copier dans une mémoire de programme d'applications du terminal (2) le programme d'application chargé dans la mémoire de la carte à puce (1).

2. Procédé suivant la revendication 1, **caractérisé en ce qu'**il comporte en outre, après la copie du programme d'application dans la mémoire du terminal (2), un traitement de données de la carte à puce (1) suivant ladite application dans le terminal (2).

3. Procédé suivant la revendication 2, **caractérisé en ce qu'**il comporte en outre, après le traitement des données de la carte (1) suivant ladite application dans le terminal (2), un effacement ou une invalidation du programme d'application copié dans la mémoire du terminal (2).

4. Dispositif de gestion d'applications dans un système de cartes à puce (1) qui comporte en outre un terminal (2) pour un traitement de données des cartes à puce (1) au moyen d'au moins une application, notamment pour la mise en oeuvre de l'une quelconque des revendications 1 à 3, ***caractérisé en ce que* :**
- au moins une carte à puce (1) comporte une mémoire pour un stockage d'au moins un programme d'application nécessaire pour un traitement de données de cartes à puce (1) dans le terminal (2),
- des moyens de mise en communication de la carte à puce (1) et du terminal (2) comportent des moyens agencés pour copier le programme d'application de la mémoire de ladite carte à puce (1) dans une mémoire de programme d'applications du terminal (2),
- des moyens de traitement du terminal (2) sont agencés pour traiter des données d'une carte à puce (1) du système au moyen du programme d'application copié de la carte (1) dans la mémoire du terminal (2).
